# FASCICULE DE BREVET EUROPEEN

(11) **EP 1 510 733 B1**
(45) Date de publication et mention de la délivrance du brevet: **30.05.2007**
(21) Numéro de dépôt: 04300535.4
(22) Date de dépôt: 12.08.2004
(51) Int. Cl.: F16H 63/20

(54) **Système de commande interne pour boite de vitesses**
Interne Steuereinrichtung für Schaltgetriebe
Internal control device for a gearbox

(30) Priorité: 29.08.2003 FR 0310273
(43) Date de publication de la demande: 02.03.2005
(73) Titulaire: Peugeot Citroën Automobiles S.A., 78140 Vélizy Villacoublay (FR)
(72) Inventeur: Belmont, Serge, 92100, BOULOGNE-BILLANCOURT (FR)
(74) Mandataire: Fernandez, Francis Lionel

(56) Documents cités:
- EP-A- 0 149 020
- EP-A- 0 300 843
- EP-A- 1 308 651

## Description

L'invention se rapporte à un système de commande interne pour boîte de vitesses et plus particulièrement pour boite de vitesses pilotées.

Les constructeurs automobiles tendent à améliorer les prestations de conduite de leurs véhicules. Les groupes motopropulseurs font partie des améliorations prioritaires. Ainsi, on a pu voir le développement de moteurs diesel à rampe commune mais également des boîtes de vitesses automatiques. Ces dernières permettent le passage sous couple de rapports de vitesses, c'est-à-dire sans à-coups lors du changement de rapport mais sont gourmandes en carburant.

Les boîtes de vitesses pilotées sont apparues ces dernières années. Elles sont de constitutions similaires à celles des boîtes de vitesses mécaniques cependant les tringleries et autres câblages entre le levier de commande et la boîte sont remplacés par des actionneurs électriques. Il est donc possible d'adapter le pilotage de la boîte en fonction des commandes du conducteur pour diminuer les à-coups du moteur ainsi que la consommation en carburant. Cependant, ces boîtes de vitesses sont plus lentes à engager les rapports car il faut transmettre l'information de changement de vitesses puis piloter les actionneurs. Les temps de rupture de couple du moteur sont par conséquent très « longs » par rapport au boîte de vitesses mécaniques ce qui nuit au confort du passage de rapport de vitesse.

Une telle boîte de vitesses est notamment connue du document EP-A-0149020.

Le but de la présente invention est de pallier tout ou partie les inconvénients cités précédemment en proposant un système de commande interne et sa méthode de changement de vitesses associée capables de diminuer le temps de rupture de couple du moteur à chaque changement de vitesses.

A cet effet, l'invention se rapporte à un système de commande interne conforme à l'objet décrit à la revendication 1.

Conformément à d'autres caractéristiques avantageuses de l'invention :
- le dispositif d'actionnement possède au moins une paire de doigts de commande qui forment sensiblement un demi-anneau, chaque doigt étant apte à actionner lesdites au moins deux crosses dans un de leurs deux sens de déplacement ce qui permet le changement de doigt de commande pour chaque changement de vitesses consécutives
- l'espacement entre lesdits au moins une paire de doigts est sensiblement égal à la largeur que représente les crosses qu'ils commandent mises côte à côte pour permettre le saut de rapport de vitesses non consécutives ;
- les éléments mobiles d'engagement comportent, en périphérie de chaque crosse, au moins une rampe apte, lors de changement de vitesses consécutives nécessitant le changement de crosse, à coopérer avec une extrémité desdits au moins deux doigts pour partiellement commencer le désengagement de la vitesse initiale afin de sécuriser l'engagement correct de la vitesse suivante ;
- le dispositif d'actionnement comporte deux paires de doigts pour répartir dans un espace plus compact les crosses du système ;
- la sélection des crosses et l'engagement ou le désengagement des vitesses sont réalisés respectivement par rotation et par translation dudit doigt des au moins deux doigts de commande ;
- la sélection des crosses et l'engagement ou le désengagement des vitesses sont réalisés respectivement par translation et par rotation dudit doigt de commande ;
- l'épaisseur dudit doigt de commande est sensiblement égale à celle desdites au moins deux crosses.

L'invention se rapporte également à une méthode conforme à l'objet décrit à la revendication 10 pour le changement de vitesses consécutives à l'aide d'un système de commande interne selon l'invention.

D'autres particularités et avantages ressortiront clairement de la description qui en est faite ci-après, à titre indicatif et nullement limitatif, en référence aux dessins annexés, dans lesquelles :
- les figures 1 à 3 sont des vues de dessus schématiques du système à des étapes successives ;
- la figure 4 est une vue schématique de côté du système selon l'invention ;
- la figure 5 est une vue en perspective de l'arrangement des crosses de commande avec son entourage ;
- la figure 6 est une vue en perspective d'une variante plus compacte du système.

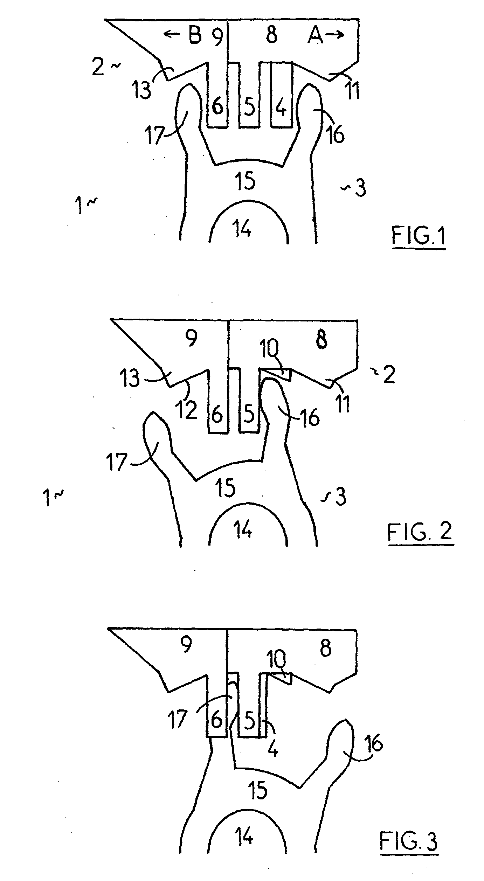

Comme illustré dans l'exemple illustré à la figure 1, le système de commande interne pour une boîte de vitesses est généralement référencé 1. Il comporte principalement un dispositif de fourchetterie 2 et un dispositif d'actionnement 3 de cette fourchetterie.

Dans l'exemple illustré aux figures 1 à 3, le dispositif de fourchetterie 2 comporte trois crosses de commande 4, 5 et 6 de forme sensiblement parallélépipédique. Ces crosses permettent lorsqu'elles sont translatées dans le sens A ou B de respectivement d'engager un premier ou un deuxième rapport de la boîte de vitesses au moyen d'éléments mobiles 7, 8 et 9 qui contiennent chacun notamment une fourchette (non représentées). Les crosses 4, 5 et 6 sont respectivement solidaires des éléments mobiles 7, 8 et 9 et sont sensiblement de même épaisseur. La technique d'engagement du type par fourchette étant très connue, elle ne sera pas d'avantage expliquée ci-après.

Par translation A ou B, les trois crosses 4, 5 et 6 permettent donc d'engager, dans le cas des figures 1 à 3, six rapports de vitesses pouvant par exemple être répartis de la manière suivante :
- crosse 4, premier et deuxième rapports ;
- crosse 5, troisième et quatrième rapports ;
- crosse 6, cinquième rapport et marche arrière.

Bien entendu, la répartition des rapports de vitesses sur les crosses 4, 5 et 6 peut-être différente et notamment une quatrième crosse peut être ajoutée pour s'occuper spécifiquement de la marche arrière, par exemple sous la crosse 4, et ainsi permettre à la crosse 6 de commander l'engagement du cinquième et d'un sixième rapports. Préférentiellement, les translations A des crosses permettent d'engager un rapport de vitesses impair et les translations B, un rapport pair (ou la marche arrière).

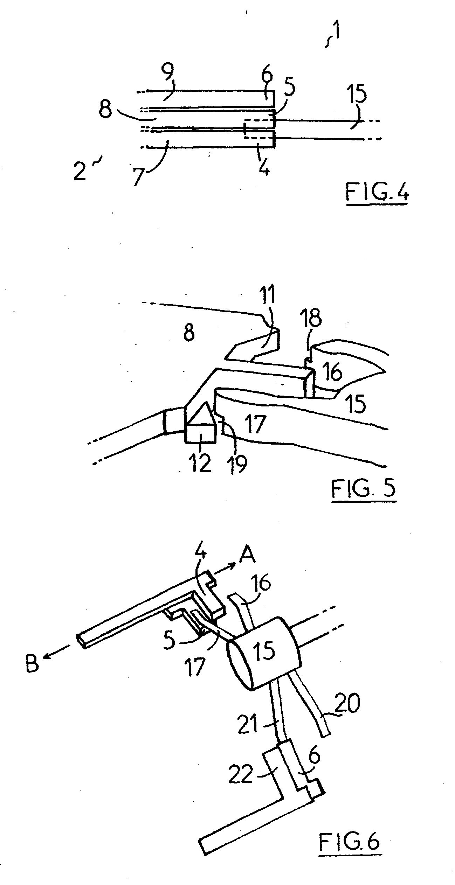

On peut voir dans l'exemple illustré à la figure 1 que les crosses 4, 5 et 6, lorsqu'elles sont toutes au point neutre (c'est-à-dire lorsque aucun rapport n'est engagé), sont sensiblement parallèlement les unes par rapport aux autres sur le plan vertical de la figure 1 mais décalées horizontalement. Les crosses 4, 5 et 6 sont également décalées, comme le montre dans l'exemple de la figure 4, en hauteur de façon à réaliser un empilement des éléments mobiles respectivement 7, 8 et 9. En perspective, les crosses 4, 5 et 6 forment donc sensiblement des marches.

Le décalage horizontal entre les crosses 4, 5 et 6 correspond sensiblement à la longueur de translation A ou B pour engager les rapports de vitesses. Comme on peut le voir dans l'exemple de la figure 2, lorsque la translation B est effectuée sur la crosse 4, cette dernière se trouve juste en dessous de la crosse 5. Ce décalage des crosses 4, 5 et 6 peut donc être compensé suivant les rapports de boîtes vitesses qui sont engagés.

Chacun des éléments mobiles 7, 8 et 9 comportent à la périphérie de leur crosse respective au moins une rampe 10, 11, 12 et 13. Seule la crosse 5 comporte à sa périphérie deux rampes 11 et 12. Ces deux dernières sont mieux visibles à la figure 5, on peut notamment voir qu'elles sont sensiblement symétriques, d'épaisseur égale à environ la moitié de celle d'une crosse et décalées en hauteur. Par conséquent, si on divisait en deux les éléments mobiles 8 sensiblement horizontalement, la rampe 11 serait solidaire de la partie haute tandis que la rampe 12 serait solidaire de la partie basse. Ainsi dans l'exemple illustré à la figure 1 où les crosses 4, 5 et 6 sont toutes au point neutre, la rampe 11 est à l'aplomb de la rampe 10 et la 13 à l'aplomb de la 12.

Le dispositif d'actionnement 3, dans l'exemple illustré aux figures 1 à 3, comporte un axe 14 sur lequel la bague 15 peut imprimer une rotation et/ou une translation. Dans l'exemple des figures 1 à 3, ces mouvements sont effectués par deux moteurs de sorte que quand l'un des moteurs impose une rotation de l'axe 14, la bague 15 imprime le même mouvement et quand l'autre moteur actionne la bague 15, celle-ci se translate le long de l'axe 14. La bague 15 comporte deux doigts 16 et 17. Ces doigts forment avec la bague 15 sensiblement un demi-anneau.

Dans l'exemple illustré aux figures 1 à 3, l'engagement des rapports par la translation A des crosses est donc réalisé par rotation de la bague 15 dans le sens des aiguilles d'une montre et plus précisément par la poussée de son doigt 17. De la même façon, par rotation dans le sens inverse des aiguilles d'une montre de la bague 15, le doigt 16 induira la translation B de la crosse qu'il aura en face de lui. Par conséquent à ces figures, la sélection des crosses 4, 5 et 6 s'effectue par translation de la bague 15, l'engagement des rapports de vitesses impaires par rotation dans le sens des aiguilles d'une montre et l'engagement des rapports de vitesses paires par rotation dans le sens inverse des aiguilles d'une montre.

A la figure 5, on peut voir que les doigts 16 et 17 comportent respectivement des évidements 18 et 19. Ces évidements 18 et 19 sont de formes correspondantes à celles respectivement des rampes11 et 12 de sorte que ces dernières passent au travers desdits évidements sans les toucher.

La méthode de changement de vitesses consécutives de la commande interne 1 est expliquée ci-après. Le système 1 comme expliqué précédemment est au point mort lorsque les crosses de commandes 4, 5 et 6 sont dans la configuration de l'exemple illustré à la figure 1. La bague 15 est positionnée symétriquement à la crosse 5 horizontalement mais à la même hauteur que la crosse 4.

Lorsque le premier rapport de vitesse est demandé par le conducteur, la bague 15, qui est déjà en face de la crosse 4 concernée par cette vitesse, est entraînée en la rotation dans le sens des aiguilles d'une montre. Le doigt 17 passe alors successivement sous les crosses 6 et 5, vient en butée avec la crosse 4 puis pousse, lors de la rupture du couple moteur, cette dernière dans un mouvement de translation A propre à engager le premier rapport via les éléments mobiles comme expliqué ci-avant.

De la même façon, lorsque le second rapport de vitesse est demandé par le conducteur, la bague 15 imprime un mouvement de rotation dans le sens inverse des aiguilles d'une montre. Le doigt 17 repasse alors sous les crosses 5 et 6 pendant que le doigt 16 successivement bute contre la crosse 4 puis la ramène jusqu'en dessous de la crosse de commande 5 dans un mouvement translation B. La configuration du système 1 est alors exactement celle illustré dans l'exemple de la figure 2.

Si le troisième rapport de vitesse est sollicité après le second, ce changement de vitesses consécutives nécessite le changement de crosses (sélection de la crosse 5) mais également un engagement du troisième rapport et le désengagement du second (translation A des crosses 4 et 5). Préférentiellement, afin de limiter le temps de rupture du couple moteur, c'est-à-dire diminuer le temps de débrayage, la sélection est faite sans débrayer puis après débrayage, un seul mouvement est réalisé pour engager le troisième rapport et désengager le second. Cependant, la sélection et le passage des rapports de vitesses peuvent également être entièrement réalisés débrayé.

Ainsi sur commande du conducteur, une demi-sélection C est réalisée ; Cela signifie, comme illustré dans l'exemple de la figure 4, que la bague 15 réalise une translation C vers le haut de façon à ce que son doigt 16 remonte pour être en face des deux crosses 4 et 5 qui seront utilisées pour le changement de vitesses. Le système 1 rompt alors le couple moteur grâce à l'embrayage puis fait tourner la bague 15 dans le sens des aiguilles d'une montre.

Dans un premier temps, la rampe 10, ne faisant plus face à l'évidemment 18 du doigt 16 suite à la demi-sélection, est heurtée par le doigt 16. La force dudit doigt qui est plus grande que celle nécessaire au désengagement d'une vitesse, impose à la crosse 4 de partiellement suivre le mouvement du doigt 16. De cette façon, on opère un désengagement partiel du second rapport de vitesse ce qui permet d'améliorer l'engagement du troisième rapport de vitesse.

Dans un second temps, le doigt 16 se dégage de la rampe 10. Le doigt de commande 17 passe alors sous la crosse 6 puis vient en butée contre la crosse 5 et force cette dernière à imprimer une translation A pour commencer l'engagement de la troisième vitesse (comme illustré à la figure 3). Rapidement, le mouvement initié par le doigt 16 sur la rampe 10 dans le premier temps, est rattrapé pour permettre au doigt 17 grâce à ladite demi-sélection de mouvoir simultanément les crosses 4 et 5 selon la translation A. Par un même mouvement, la crosse 4 est donc désengagée de sa seconde vitesse et la crosse 5 est déplacée pour engager la troisième vitesse.

Dans cette position si le quatrième rapport de vitesse est demandé par le conducteur, la bague 15, dont le doigt 17 est toujours en face des crosses 4 et 5, opère sans rupture de couple à nouveau une demi-sélection pour être en face uniquement de la crosse 5 puis est entraînée en la rotation dans le sens inverse des aiguilles d'une montre. Le doigt 16 vient alors en butée avec la crosse 5 puis pousse, lors de la rupture du couple moteur, cette dernière dans un mouvement de translation B propre à engager le quatrième rapport de vitesse.

Par analogie, les rapports successifs 4^{e}-5^{e}, 5^{e}-4^{e} et 3^{e}-2^{e} se déroule comme celui 2^{e}-3^{e} précédemment expliqué tout comme 5^{e}-6^{e}, 4^{e}-3^{e} et 2^{e}-1^{er} comme 3^{e}-4^{e} et 6^{e}-5^{e} comme 1^{er}-2^{e}. Préférentiellement et pour permettre le saut de rapport de vitesses, c'est-à-dire le changement de rapport de vitesses non consécutives, l'écartement entre les doigts de commande 16 et 17 est égal à la largeur du nombre de crosses qu'ils commandent.

Les rampes 10 et 11 seront donc utilisées lors des rapports de vitesses consécutives croissantes et les rampes 12 et 13 lors de rapports de vitesses consécutives décroissantes pour permettre lors de changement de crosse de partiellement désengager la vitesse initiale comme expliqué précédemment.

Bien entendu, la présente invention ne se limite pas à l'exemple illustré mais est susceptible de diverses variantes et modifications qui apparaîtront à l'homme de l'art. Plus particulièrement, il est évident qu'une clé d'interverrouillage peut être ajoutée afin de prévenir les mauvais engagements de rapport de vitesses et aider à préciser les mouvements de la bague 15. Egalement comme cité précédemment, il peut y avoir plus de crosses notamment pour en spécialiser une au passage de la marche arrière.

L'ensemble crosses - doigts de commande peut aussi être de configuration différente comme une crosse en U et un seul doigt de commande. Enfin comme il est déjà connu de le faire, un système de gestion de la boîte de vitesses peut être utilisé pour, par exemple à partir de l'enfoncement de la pédale d'accélérateur, du régime moteur et de lois de passage de vitesses, piloter de façon entièrement automatique le système de commande interne 1.

Il faut également comprendre que la représentation des figures 1 à 5 ne saurait limiter à une sélection par translation et un passage de vitesses par rotation. A la figure 6 est présentée une variante du système 1 dont la sélection est réalisée en rotation et le passage des vitesses par translation par la bague 15. Cette variante comporte avantageusement une configuration propre à la rendre plus compacte et qui utilise deux autres doigts 20 et 21. Elle est rendue plus compacte en fractionnant les crosses 4, 5 et 6, 22 à deux endroits différents de la boîte de vitesse pour diminuer la hauteur de l'espace nécessaire à l'empilement des crosses.

Comme expliqué précédemment, pour passer le premier rapport, il faut déplacer la crosse 4 selon la translation A. Ce déplacement est réalisé par la translation de la bague 15 et plus particulièrement par son doigt 17. Les demi-sélection se font donc désormais par une rotation de la bague 15 da manière à ce que les doigts de commande 16, 17, 20 et 21 soient en face des deux crosses qui seront utilisées pour le changement de vitesses consécutives impliquant le changement de crosse. On remarquera que dans l'exemple illustré à la figure 6, le passage entre le quatrième et le cinquième rapports de vitesses, qui nécessitent les crosses 4 et 5, les deux paires de doigts de commandes 16-17 et 20-21 sont utilisés.

## Revendications

1. Système de commande interne (1), notamment pour boîte de vitesses pilotée, comportant au moins deux crosses (4, 5, 6, 22) chacune solidaire d'éléments mobiles d'engagement (7, 8, 9) de rapports de vitesses et un dispositif d'actionnement (3) comprenant au moins deux doigts de commande (16, 17, 20, 21) qui permettent la sélection desdites crosses et l'engagement ou le désengagement des rapports de vitesses **caractérisé en ce que** les crosses (4, 5, 6, 22) sont décalées les unes par rapport aux autres de telle sorte que, lors de changement de vitesses consécutives nécessitant le changement de crosse, ledit décalage entre les deux crosses utilisées est sensiblement compensé pour permettre audit à l'un des au moins deux doigts de commande de les mouvoir simultanément.

2. Système de commande interne (1) selon la revendication 1, **caractérisé en ce que** lesdites au moins deux crosses sont décalées sensiblement en forme de marches.

3. Système de commande interne (1) selon la revendication 1 ou 2, **caractérisé en ce que** le dispositif d'actionnement (3) possède au moins une paire de doigts de commande (16, 17, 20, 21) qui forment sensiblement un demi-anneau, chaque doigt étant apte à actionner lesdites au moins deux crosses dans un de leurs deux sens de déplacement.

4. Système de commande interne (1) selon la revendication 3, **caractérisé en ce que** l'espacement entre lesdits au moins une paire de doigts est sensiblement égal à la largeur que représente les crosses qu'ils commandent mises côte à côte pour permettre le saut de rapport de vitesses non consécutives.

5. Système de commande interne (1) selon la revendication 3 ou 4, **caractérisé en ce que** les éléments mobiles d'engagement (7, 8, 9) comportent, en périphérie de chaque crosse, au moins une rampe (10, 11, 12, 13) apte, lors de changement de vitesses consécutives nécessitant le changement de crosse, à coopérer avec une extrémité desdits au moins deux doigts pour partiellement commencer le désengagement de la vitesse initiale afin de sécuriser l'engagement correct de la vitesse suivante.

6. Système de commande interne (1) selon l'une des revendications 3 à 5, **caractérisé en ce que** le dispositif d'actionnement comporte deux paires de doigts de commande (16, 17, 20, 21) pour répartir dans un espace plus compact les crosses (4, 5, 6, 22) du système (1).

7. Système de commande interne selon l'une des revendications précédentes **caractérisé en ce que** la sélection des crosses (4, 5, 6, 22) et l'engagement ou le désengagement des vitesses sont réalisés respectivement par rotation et par translation dudit doigt des au moins deux doigts de commande.

8. Système de commande interne (1) selon l'une des revendications 1 à 6 **caractérisé en ce que** la sélection des crosses (4, 5, 6, 22) et l'engagement ou le désengagement des vitesses sont réalisés respectivement par translation et par rotation dudit doigt des au moins deux doigts de commande.

9. Système de commande interne (1) selon l'une des revendications précédentes, **caractérisé en ce que** l'épaisseur dudit doigt des au moins deux doigts de commande est sensiblement égale à celle desdites au moins deux crosses.

10. Méthode pour le changement de vitesses consécutives à l'aide d'un système de commande interne (1) selon l'une des revendications précédentes **caractérisé en ce qu'**elle comporte les étapes consistant à :
- détecter si le changement de vitesse nécessite le changement de crosse (4, 5, 6, 22) ;
- si non : vérifier si ledit doigt des au moins deux doigts (16, 17, 20, 21) est en face de deux crosses à la fois ;
- si non : actionner l'engagement par ledit doigt de la vitesse demandée;
- si oui: réaliser une demi-sélection dudit doigt de manière à ce qu'il soit positionné en face de la crosse qui comporte la vitesse demandée ;
actionner l'engagement par ledit doigt de la vitesse demandée ;
- si oui : réaliser une demi-sélection dudit doigt de manière à ce qu'il soit positionné en face de la crosse de la vitesse actuellement engagée et de la crosse de la vitesse à engager ;
actionner l'engagement par ledit doigt de la vitesse demandée ce qui désengage en même temps la précédente vitesse pour permettre de limiter le temps de débrayage.

## Claims

1. Internal control system (1), in particular for an automated gear box, comprising at least two sprockets (4, 5, 6, 22), each integral with mobile elements (7, 8, 9) for engaging gear ratios and an actuation device (3) comprising at least two control fingers (16, 17, 20, 21), which allow the selection of said sprockets and the engagement or disengagement of the gear ratios **characterised in that** the sprockets (4, 5, 6, 22) are offset from one another in such a way that, at the time of consecutive gear changing requiring the sprocket to be changed, said offset between the two sprockets used is substantially compensated for in order to allow for one of the at least two control fingers to move them simultaneously.

2. Internal control system (1) according to Claim 1, **characterised in that** said at least two sprockets are offset substantially in the form of steps.

3. Internal control system (1) according to Claim 1 or 2, **characterised in that** the actuation device (3) has at least one pair of control fingers (16, 17, 20, 21), which form substantially a half-ring, each finger being capable of actuating said at least two sprockets in one of their two directions of displacement.

4. Internal control system (1) according to Claim 3, **characterised in that** the spacing between said at least one pair of fingers is substantially equal to the width represented by the sprockets that they control put side by side in order to allow non-consecutive gear ratios to be skipped.

5. Internal control system (1) according to Claim 3 or 4, **characterised in that** the mobile engagement elements (7, 8, 9) comprise, on the periphery of each sprocket, at least one ramp (10, 11, 12, 13) capable, during consecutive gear changes requiring the sprocket to be changed, of cooperating with one end of said at least two fingers in order to begin partly to disengage the initial gear so as to secure the correct engagement of the next gear.

6. Internal control system (1) according to one of Claims 3 to 5, **characterised in that** the actuation device comprises two pairs of control fingers (16, 17, 20, 21) in order to distribute the sprockets (4, 5, 6, 22) of the system (1) in a more compact space.

7. Internal control system according to one of the preceding claims **characterised in that** the selection of the sprockets (4, 5, 6, 22) and the engagement or disengagement of the gears are carried out respectively by rotation and by translation of said finger of the at least two control fingers.

8. Internal control system (1) according to one of Claims 1 to 6 **characterised in that** the selection of the sprockets (4, 5, 6, 22) and the engagement or disengagement of the gears are carried out respectively by translation and by rotation of said finger of the at least two control fingers.

9. Internal control system (1) according to one of the preceding claims, **characterised in that** the thickness of said finger of the at least two control fingers is substantially equal to that of said at least two control fingers.

10. Method for consecutive gear changing using an internal control system (1) according to one of the preceding claims **characterised in that** it comprises the steps consisting in:
- detecting whether the gear change requires the sprocket (4, 5, 6, 22) to be changed;
- if not: checking whether said finger of the at least two fingers (16, 17, 20, 21) is facing two sprockets at the same time;
- if not: actuating the engagement by said finger of the gear requested;
- if so: making a half-selection of said finger so that it is positioned facing the sprocket that comprises the gear requested;
actuating the engagement by said finger of the gear requested;
- if so: making a half-selection of said finger so that it is positioned facing the sprocket of the gear currently engaged and the sprocket of the gear to be engaged;
actuating the engagement by said finger of the gear requested, which at the same time disengages the preceding gear in order to allow the declutching time to be limited.

## Patentansprüche

1. System zur internen Steuerung (1) insbesondere für ein automatisiertes Schaltgetriebe, das mindestens zwei Stäbe (4, 5, 6, 22), die jeweils mit beweglichen Einfügeelementen (7, 8, 9) von Gängen fest verbunden sind, und eine Betätigungsvorrichtung (3) mit mindestens zwei Steuerfingern (16, 17, 20, 21) aufweist, die die Auswahl der Stäbe und das Einfügen oder Lösen der Gänge ermöglichen, **dadurch gekennzeichnet, dass** die Stäbe (4, 5, 6, 22) derart zueinander versetzt sind, dass bei einem Schalten in aufeinanderfolgende Gänge, welches das Wechseln des Stabs erfordert, der Versatz zwischen den beiden verwendeten Stäben im Wesentlichen kompensiert wird, um es dem einen der mindestens zwei Steuerfinger zu ermöglichen, sie gleichzeitig zu bewegen.

2. System zur internen Steuerung (1) nach Anspruch 1, **dadurch gekennzeichnet, dass** die mindestens zwei Stäbe im Wesentlichen stufenförmig versetzt sind.

3. System zur internen Steuerung (1) nach Anspruch 1 oder 2, **dadurch gekennzeichnet, dass** die Betätigungsvorrichtung (3) mindestens ein Paar Steuerfinger (16, 17, 20, 2 1) aufweist, die im Wesentlichen einen Halbring bilden, wobei jeder Finger die mindestens zwei Stäbe in einer ihrer beiden Bewegungsrichtungen betätigen kann.

4. System zur internen Steuerung (1) nach Anspruch 3, **dadurch gekennzeichnet, dass** der Abstand zwischen dem mindestens einen Paar Fingern im Wesentlichen der Breite der Stäbe entspricht, die sie Seite an Seite steuern, um den Schaltsprung auf nicht aufeinanderfolgende Gänge zu ermöglichen.

5. System zur internen Steuerung (1) nach Anspruch 3 oder 4, **dadurch gekennzeichnet, dass** die beweglichen Einfügeelemente (7, 8, 9) an der Peripherie jedes Stabs mindestens eine Rampe (10, 11, 12, 13) aufweisen, die bei einem Schalten in aufeinanderfolgende Gänge, welches den Wechseln des Stabs erfordert, mit einem Ende der mindestens zwei Finger zusammenwirken kann, um das Lösen des ursprünglichen Gangs teilweise zu beginnen, damit sichergestellt ist, dass der folgende Gang korrekt eingefügt wird.

6. System zur internen Steuerung (1) nach einem der Ansprüche 3 bis 5, **dadurch gekennzeichnet, dass** die Betätigungsvorrichtung zwei Paare an Steuerfingern (16, 17, 20, 21) aufweist, um die Stäbe (4, 5, 6; 22) des Systems (1) in einem kompakteren Raum zu verteilen.

7. System zur internen Steuerung nach einem der vorhergehenden Ansprüche, **dadurch gekennzeichnet, dass** die Auswahl der Stäbe (4, 5, 6, 22) und das Einfügen oder Lösen der Gänge durch Drehung beziehungsweise durch Translation des Fingers der mindestens zwei Steuerfinger erfolgen.

8. System zur internen Steuerung (1) nach einem der Ansprüche 1 bis 6, **dadurch gekennzeichnet, dass** die Auswahl der Stäbe (4, 5, 6, 22) und das Einfügen oder Lösen der Gänge durch Translation beziehungsweise durch Drehung des Fingers der mindestens beiden Steuerfinger erfolgen.

9. System zur internen Steuerung (1) nach einem der vorhergehenden Ansprüche, **dadurch gekennzeichnet, dass** die Dicke des Fingers der mindestens zwei Steuerfinger im Wesentlichen der Dicke der mindestens zwei Stäbe entspricht.

10. Verfahren zum Schalten in aufeinanderfolgende Gänge mithilfe eines Systems zur internen Steuerung (1) nach einem der vorhergehenden Ansprüche, **dadurch gekennzeichnet, dass** es die folgenden Schritte aufweist:
- Feststellen, ob das Schalten ein Wechseln des Stabs (4, 5, 6, 22) erfordert;
- falls nicht: Überprüfen, ob sich der Finger der mindestens zwei Finger (16, 17, 20, 21) gegenüber von zwei Stäben befindet;
- falls nicht: Veranlassen des Einfügens des gewünschten Gangs durch den Finger;
- falls ja: Durchführen einer Halbauswahl des Fingers, sodass er gegenüber dem Stab positioniert wird, der den gewünschten Gang umfasst;
Veranlassen des Einfügens des gewünschten Gangs durch den Finger;
- falls ja: Durchführen einer Halbauswahl des Fingers, sodass er dem Stab des aktuell eingelegten Gangs und dem Stab des einzulegenden Gangs gegenüberliegt;
Veranlassen des Einlegens des gewünschten Gangs durch den Finger, was gleichzeitig den vorhergehenden Gang löst, um die Auskupplungszeit zu begrenzen.
